# EUROPEAN PATENT APPLICATION

(11) **EP 2 631 056 A2**
(43) Date of publication of application: **28.08.2013**
(21) Application number: 12169564.7
(22) Date of filing: 25.05.2012
(51) Int. Cl.: B29C 45/14, B29C 45/37, B29C 33/00

(54) **Texturing a mobile electronic device part**

(30) Priority: 24.02.2012 US 201213404690
(71) Applicant: Research In Motion Limited, Waterloo, ON N2L 3W8 (CA)
(72) Inventor: Steinhoff, William Stephen, Sunrise, FL Florida 33323 (US)
(74) Representative: Finnie, Peter John

(57) **Abstract**

A part for a mobile electronic device (100) is molded by providing a three dimensionally textured film (202) in a mold (200). A moldable polymer is provided in the mold (200) over the film (202) and molded into a shape of the part. The part is removed from the mold (200), and the three dimensionally textured film (202) is removed from the part.

## Description

### BACKGROUND

A mobile electronic device can be a cellular phone, including a smart phone, a dedicated personal digital assistant (PDA) with or without phone or data capabilities, an electronic reading device, a tablet computer, a digital media player, or any other mobile device. In many instances, the terms "mobile device," "hand held device" and "hand set" are interchangeable, both regarding to electronic devices available as information stores for personal contacts, calendar appointments, and the like. Due to its strength, light weight and ready manufacture, much of the mobile device is molded of polymer. Some surfaces, particularly outward facing, exterior surfaces, have a three dimensional texture provided for tactical and aesthetic purposes. The three dimensional texture can be molded into the surface. However, molds for this type of texture are expensive and difficult to construct, because of the complexity and relatively small size of the desired texture.

### DESCRIPTION OF DRAWINGS

FIG. 1A is a font view of a mobile electronic device.
FIG. 1 B is a side view of the mobile electronic device.
FIG. 2A is a cross-sectional view of a three dimensionally textured film laminated to a film with a graphical design and residing in a mold for a part of the mobile electronic device.
FIG. 2B is a cross-sectional view of the part of the mobile electronic device of FIG. 2A extracted from the mold and with the three dimensionally textured film removed from the part.
FIG. 3A is a perspective view of the mobile electronic device having a three dimensional texture molded into a part of the device.
FIG. 3B is a perspective view of another mobile electronic device having a different three dimensional texture molded into a part of the device

Like reference symbols in the various drawings indicate like elements.

### DETAILED DESCRIPTION

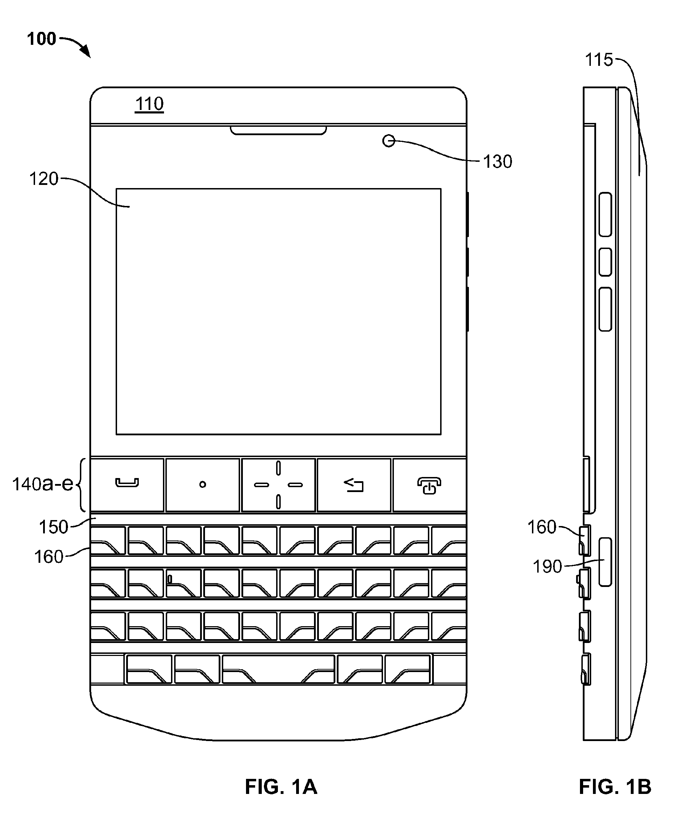

FIG. 1A is a front view of a mobile electronic device 100 according to the present disclosure. The mobile electronic device 100 can be a cellular phone, including a smart phone, a dedicated personal digital assistant (PDA) with or without phone or data capabilities, an electronic reading device, a tablet computer, a digital media player, or any other mobile device. In many instances, the terms "mobile device," "hand held device" and "hand set" are interchangeable, both regarding to electronic devices available as information stores for personal contacts, calendar appointments, and the like. Additionally, many mobile devices wirelessly connect to the public Internet to allow for the sending and receiving of e-mail. Such mobile devices may also provide more general Internet access, such as access to the World Wide Web. For example, the mobile device 100 may be designed to operate with the General Packet Radio Service (GPRS) mobile data communication networks and may also be designed to operate with any of a variety of voice communication networks, such as AMPS, TDMA, CDMA, PCS, GSM, etc. Other types of data and voice networks, both separate and integrated, may also be utilized with the mobile device 100.

In certain instances, the mobile device 100 is a two-way RF communication device having voice and data communication capabilities. In addition, the mobile device 100 can have the capability to communicate with other mobile devices or computer systems via the Internet.

The mobile device 100 includes a front frame 110, a screen 120, a number of shortcut control buttons 140a-e, and a keypad 160. A forward facing surface of the front frame 110 forms the forward facing surface of the mobile device 100. A back cover 115 (shown in FIG. 1 B) is attached to a back side of the front cover, and a backward facing surface of the back cover 115 defines the back surface of the mobile device 100.

The front frame 110 cooperates with the back cover 115 to house inner components of the mobile device 100. The front frame 110 serves as an installation platform for user interface components of the mobile device 100. For example, the screen 120 and the short cut control buttons 140a-e are installed on top of the front frame 110.

The screen 120 can be both an input device (i.e., a touch sensitive device) and an output device (i.e., a display). In some embodiments, the screen 120 is a light emitting diode (LED) backlit liquid crystal display (LCD) with multi-touch control functions. Some of these features may be omitted in other examples. For example, the screen 120 may lack the multi-touch control functions, or the screen 120 may lack the LED backlit feature.

In some embodiments, the mobile device 100 may include additional features, such as a front camera 130.

The shortcut buttons 140a-e are dedicated buttons for specific functions in the mobile device 100. In some embodiments, the shortcut buttons may include more than one input mechanism. For example, the shortcut buttons can include pressure sensors and/or optical sensors for navigational up-down-left-right input. In certain instances, the shortcut buttons can activate a specific operation mode of the mobile device, such as a mode for cellular phone, a mode for applications, a mode for internet browsing, etc. The illustrated shortcut buttons 140a-e are separated from the keypad 160; however, in some embodiments, the shortcut buttons 140a-e can be integrated into the keypad 160. In certain instances, the shortcut buttons 140a-e could alternately or additionally be implemented as virtual buttons on a touchscreen display.

FIG. 1 B is the side view of the mobile device 100 according to the present disclosure. This perspective shows that the keypad 160 can include a side key 190 installed on a sidewall of the mobile device 100. Although in this illustration there is only one side key 190 associated with the keypad 160, in some embodiments, there can be two or more side keys integrated with the keypad 160.

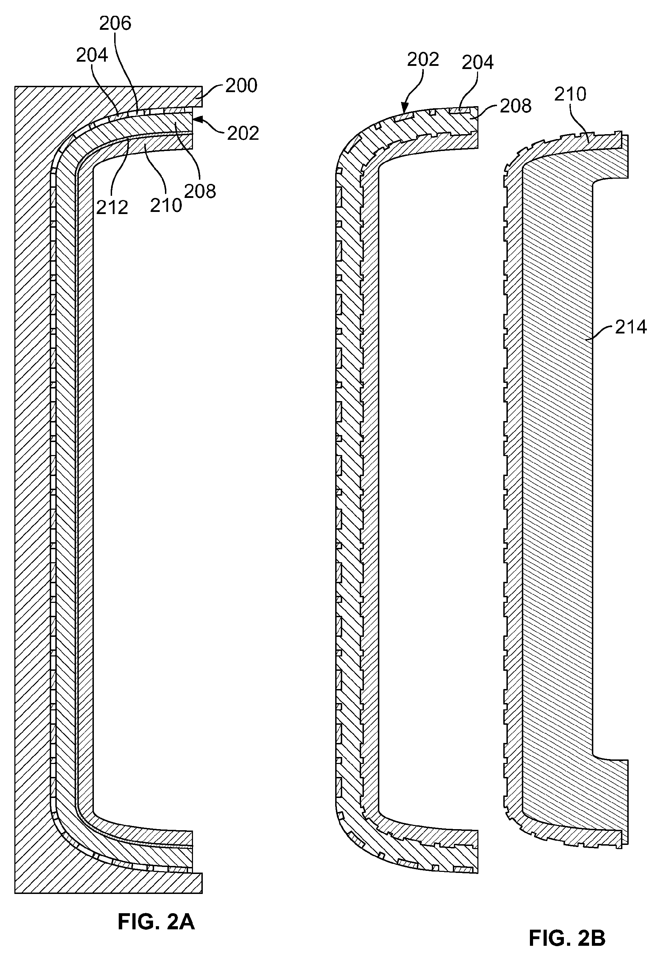

Much of the mobile device 100 is molded of polymer. For example, the front frame 110 and back cover 115, as well as other components, are often constructed of polycarbonate and/or acrylonitrile butadiene styrene (ABS); however, other polymers, including fiber reinforced polymer, could be used. Some surfaces, particularly outward facing, exterior surfaces, have a three dimensional texture provided for tactical and aesthetic purposes. The three dimensional texture can be molded into the surface. A manner of molding such a three dimensional texture into a part for use in a mobile device, such as mobile device 100, is described below with reference to FIGS. 2A and 2B.

In the molding process, a mold 200 of a mobile electronic device part 214 can be a mold for a completed part of the mobile electronic device or for a part that needs further finishing to be a completed part of the device. For example, the mold 200 can be a mold for all or a portion of a back cover (e.g., back cover 115 of FIG. 1 B), all or part of a front frame (e.g., front frame 110), and/or another part of the mobile electronic device. In the depicted example, the female surface of the mold 200 becomes the outward facing surface of the part 214. For example, in the example of a back cover or front face, that surface (i.e., the outward facing surface of the part 214) would be the surface contacted by the user when using the mobile device. Although only shown as a female mold, mold 200 can include additional pieces. For example, the illustrated mold 200 can include a second mating mold piece with portions configured to be received in the female portion and define a uniform and/or non-uniform thickness, attachment and/or alignment tabs, and other features into the molded part 214. In certain instances, the mold 200 is designed as an injection mold for use in injection molding machinery. In injection molding, a moldable polymer is injected into the mold in a flowable and/or liquid state under pressure and allowed to harden. Thereafter, the mold is opened and the molded part 214 removed from the mold 200.

Texture is produced on the molded part by a three dimensionally textured film 202 that is placed in the mold 200 prior to introducing the moldable polymer. The three dimensionally textured film 202 is thin enough to conform to the curvatures and shape of the mold 200, and in certain instances, can be relatively much thinner than the thickness of the molded part 214. In certain instances, the film 202 is a polymer, for example, a polymethyl methacrylate (PMMA), polycarbonate (PC), polyethylene (PE), and/or another type of polymer. In certain instances, the film 202 could be another material and/or a combination of materials.

When the moldable polymer is introduced into the mold 200, the three dimensionally textured film 202 imparts a texture onto the molded part 214 that corresponds to the three dimensional texture of the film 202 as though the interior surface of the mold 200 were textured like the film 202. Therefore, an inverse of the desired texture of the part 214 is provided in or on the film 202. As discussed in more detail below, when the part 214 is removed from the mold, the film 202 is removed from the part 214. Thus, a release layer 212 of release agent (described in more detail below) is provided between the texture film 202 and the moldable polymer 214.

The three dimensional texture can be an arrangement of peaks 204 and valleys 206 that cooperate in defining the texture. The thickness of the film 202 dictates the height, from the remaining surface of the part, of the texture it imparts to the part, with the dimensions of the peaks 204 dictating the dimensions of corresponding valleys in the part 214 and the dimensions of the valleys 206 dictating the dimensions of corresponding peaks in the part 214.

The three dimensional texture can be imparted to the film 202 in a number of different manners. In certain instances, the three dimensional texture can be defined by material deposited onto the film 202. The deposited material defines the peaks 204 and the surface of the film 202 defines the valleys 206. The material deposited on the film can be printed onto the film and/or imparted through a stencil that is removed to reveal the deposited material. In certain instances, the deposited material can be an ultraviolet curable polymer that is deposited in a flowable and/or liquid form and hardened in selected locations by exposure to ultraviolet light. In certain instances, the three dimensional texture can be defined by apertures (i.e., holes through the film) and/or reliefs (recesses in the surface of the film) in the film 202. The apertures and/or reliefs define the valleys 206 and the surface of the film 202 defines the peaks 204. The reliefs and/or apertures can be cut into the film 202, for example, by die cutting, etching and/or in another fashion. In certain instances, the three dimensional texture can be defined by plastically deforming the film 202. Portions of the film can be deformed out of the plane of the film to define both the peaks 204 and valleys 206. Still other examples of imparting the three dimensional texture to the film 202 exist. In certain instances, the three dimensional texture can be imparted to the film 202 using multiple of the techniques described above, and/or other techniques, in combination.

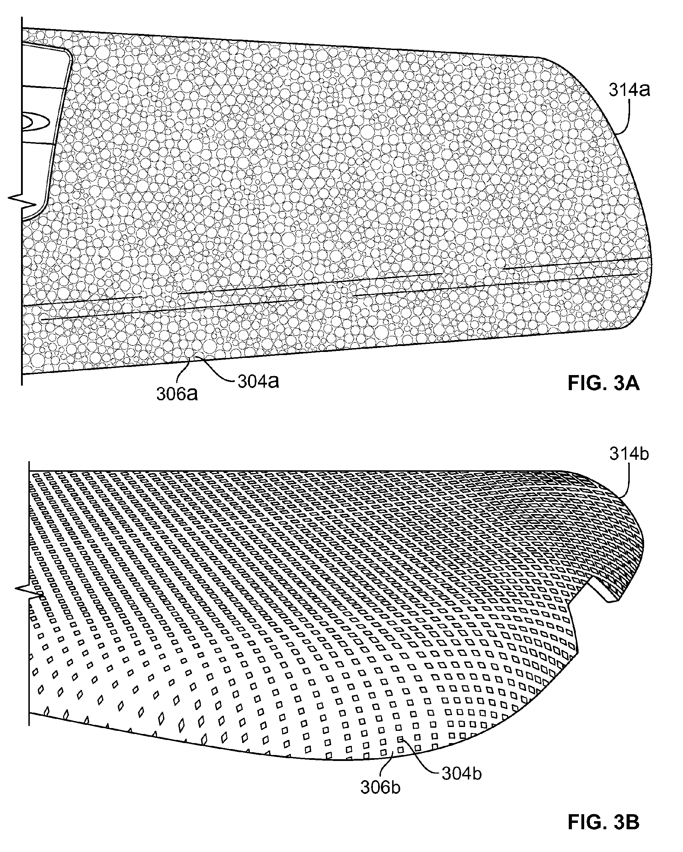

The three dimensional texture can be a repeating pattern and/or a non-repeating pattern. For example, as seen in FIG. 3A, the three dimensional film has produced a part 314a, specifically a back cover, having a repeating pattern of segments. Within each segment, however, the pattern of peaks 304a and valleys 306a is non-repeating. In another example, as seen in FIG. 3B, the three dimensional film has produced a part 314b, again a back cover, having a uniformly repeating pattern of peaks 304b and valleys 306b. In both examples, the valleys 306a and 306b cooperate to define a uniform smooth surface beneath the peaks 304a and 304b, but in other instances, the valleys could define a non-uniform surface. Similarly, each of the peaks 304a and 304b protrude to the same height, but in other instances, the peaks could protrude to different heights.

Referring back to FIGS. 2A and 2B, although all of the three dimensionally textured film 202 shown in the cross-section is textured, in certain instances, some portions of the film 202 can have a three dimensional texture and other portions not. Such an arrangement yields some portions of the part 214 having a three dimensional texture and some portions not. Additionally, or alternatively, the three dimensional film 202 can span the entire mold 200 or can be provided only in certain portions of the mold 200. For example, the film 202 can be omitted where no texture is desired on the part 214. In certain instances, films 202 of differing texture can be provided in different parts of the mold 200 to provide differing textures on the part 214.

FIG. 2A shows the film 202 with the peaks 204 and valleys 206, i.e., the three dimensional texture, oriented toward the mold 200 surface. In other instances, the three dimensional texture can be oriented toward the part 214.

In certain instances, a film 210 having a graphical design can be provided in the mold 200 so that it is between the three dimensionally textured film 202 and the moldable polymer when the moldable polymer is introduced into the mold 200. The graphical design can include images, artwork, logos, solid and/or different colors, faux finishes (e.g. metallic, wood grain, and/or other), text and/or other graphical design. In certain instances, the film 210 can be an in-mold labeling (IML) film. In certain instances, the graphical design can be imparted to the film 210 by printing. As will be described in more detail below, the film 210 remains on the molded polymer and becomes a portion of the part 214. Therefore, the film 210 can be selected to provide a hard, durable layer to the outer surface of the part 214. In certain instances the film 210 is made of polyethylene terephthalate (PET) and/or another polymer, but could additionally or alternately be made of another material. The film thickness is selected, at least in part, to allow transmission of the texture of the three dimensionally textured film 202 through to the moldable polymer.

In certain instances, the film 210 can have a coating. In one example, the coating is selected to provide a certain tactile feel to the part such as a grippy and/or soft-touch. For example, the coating can be a polyurethane and/or another type of grip and/or soft-touch coating.

A release layer 212 of mold release agent can be provided between the three dimensionally textured film 202 and the film 210 with graphical design to facilitate separating the films after the part 214 is molded. The mold release agent 212 can be applied as a flowable and/or liquid to the surface of either film 202 or 210 and/or in another form.

One or both of the film 202 and film 210 can have alignment features to align them with respect to the mold 200, and thus, facilitate desired placement and alignment of the resulting three dimensional texture and/or graphical design on the part 214. In certain instances, the three dimensionally textured film 202 and film 210 can be laminated together prior to being placed into the mold. Laminating the films 202 and 210 together facilitates desired placement and alignment of the three dimensional texture relative to the graphical design. In certain instances, the release layer 212 can be laminated between the two films 202 and 210. In certain instances, the film 202 can be laminated with the film 210 prior to the three dimensional texture being imparted to the film 202 and the three dimensional texture can be imparted after lamination. In certain instances the film 202 can be laminated with the film 210 prior to the graphical design being imparted to the film 210 and the graphical design imparted after lamination.

In producing the part 214, the three dimensionally textured film 202 is provided in the mold 200. The film 210 having a graphical design, if desired, is also provided in the mold 200, laminated with the textured film 202 or separately. A moldable polymer is then provided in the mold 200, and allowed to harden, molded into the shape of the part 214. The part 214 is then withdrawn from the mold 200, and the three dimensionally textured film 202 is removed from the part 214 to reveal the three dimensional texture on the part 214. The three dimensionally textured film 202 can be removed from the part 214 concurrently with removing the part from the mold 200 or after the part is removed from the mold 200.

As is apparent from the discussion above, the concepts herein encompass a manner of molding a part for a mobile electronic device that enables molding texture into the part. The part is molded using a three dimensionally textured film in a mold. A moldable polymer is provided in the mold over the film, and molded into a shape of the part. Thereafter, the part is removed from the mold, and the three dimensionally textured film is removed from the part. Using a three dimensionally textured film obviates the difficulties and expense in forming the texture directly into the mold, and facilitates forming finer textures. In certain instances, the part can be molded additionally with a film having a graphical design in the mold. Using the film with the graphical design facilitates applying graphical designs to the part.

A number of embodiments have been described. Nevertheless, it will be understood that various modifications may be made. Accordingly, other embodiments are within the scope of the following claims.

## Claims

1. A method of molding a part for a mobile electronic device, comprising:
providing a three dimensionally textured film in a mold of the part;
providing a moldable polymer in the mold and molding the polymer into a shape of the part;
withdrawing the part from the mold; and
removing the three dimensionally textured film from the part.

2. The method of claim 1, further comprising providing a film having a graphical design in the mold; and
where providing the moldable polymer in the mold comprises providing the three dimensionally textured film and the film having the graphical design residing in-between the moldable polymer and the mold.

3. The method of claim 2, where removing the three dimensionally textured film from the part comprises leaving the film with the graphical design together with the polymer.

4. The method of claim 2, where the graphical design is printed on the film.

5. The method of claim 2, further comprising laminating the three dimensionally textured film with the film having the graphical design prior to placing the films in the mold.

6. The method of claim 2, where the film having the graphical design further comprises a soft-touch coating.

7. The method of claim 2, further comprising providing a release layer between the three dimensionally textured film and the film having the graphical design.

8. The method of claim 1, where the three dimensionally textured film comprises a three dimensional texture defined by apertures in the film.

9. The method of claim 1, where the three dimensionally textured film comprises a three dimensional texture embossed into the film.

10. The method of claim 1, where the three dimensionally textured film comprises a three dimensional texture defined by a material deposited on a surface of the film.

11. The method of claim 1, where the three dimensionally textured film comprises a repeating texture pattern.

12. The method of claim 1, where the mold is an injection mold and providing a moldable polymer in the mold comprises injecting the moldable polymer into the mold.

13. An assembly, comprising:
a three dimensionally textured film in a mold of a part for a mobile electronic device; and
a moldable polymer in the mold, molded to a shape of the part, the three dimensionally textured film adapted to be removed from the polymer.

14. The assembly of claim 13, further comprising a release layer of release agent between the three dimensionally textured film and the moldable polymer.

15. The assembly of claim 13, where the three dimensionally textured film comprises a three dimensional texture defined by at least one of apertures in the film, a three dimensional texture embossed into the film, or a material deposited on a surface of the film.

16. The assembly of claim 13, further comprising a film with a graphical design between the three dimensionally textured film and the moldable polymer.
